# EUROPEAN PATENT APPLICATION

(11) **EP 0 997 763 A1**
(43) Date of publication of application: **03.05.2000**
(21) Application number: 98308856.8
(22) Date of filing: 29.10.1998
(51) Int. Cl.: G02C 1/02, G02C 5/22

(54) **Spectacles**

(71) Applicant: Stepper Limited, Tunbridge Wells, Kent TN2 3EP (GB)
(72) Inventor: Stepper, Hans, C/o Stepper Limited, Tunbridge Wells, Kent TN2 3EP (GB)
(74) Representative: Haley, Stephen

(57) **Abstract**

A spectacle frame comprises an arm support member arranged to be attached to a lens in use. The arm support member comprises a first arm support portion having a spindle formed thereon and a second arm support portion arranged to abut the spindle in use. An arm member is arranged to pivot, in use, around the spindle, and in use, the second arm retaining portion retains the arm on the spindle when abutting the spindle.

## Description

This invention relates to improvements in spectacles and spectacle frames.

A pair of spectacles generally comprises a lens for each eye of a wearer and a frame supporting the lenses. The frame has a central bridge portion designed to rest on the nose of a wearer and an arm on each side arranged to rest on the ears of the wearer. Many frame designs are known, with some totally surrounding the outer rim of the lenses that they support, and others being attached only to a portion of the lenses or, indeed, comprising only arms and a central bridge portion, with the lenses themselves forming the remainder of the spectacle construction. With this latter design, attachment to the lens of the bridge and/or arms is often difficult, as the attachment must be secure and rigid, yet must not require precise and complex cutting of the lens, which may cause damage to the lens, resulting in unnecessary manufacturing expense. Furthermore, it is difficult to provide a bridge which is rigid enough to properly support the lenses on the nose, which is aesthetically pleasing, yet which is inexpensive to manufacture.

Most spectacle frames have arms which are pivotally attached to the lens via a simple hinge arrangement. The hinge arrangement usually has a simple pivot screw. Such an arrangement has a tendency to loosen over time, and is quite expensive to manufacture, given the precision manufacturing requirements of any screw and thread arrangement employed. Furthermore, known hinge arrangements are very limited in the types of materials that they are able to employ, meaning that cost reduction in manufacture is difficult, and the verification in design is limited.

According to the present invention there is provided a spectacle frame comprising:
an arm support member arranged to be attached to a lens in use, the arm support member comprising a first arm support portion having a spindle formed thereon and a second arm support portion arranged to abut the spindle in use; and
an arm member, the arm member arranged to pivot, in use, around the spindle,
   whereby, in use, the second arm retaining portion retains the arm on the spindle when abutting the spindle.

A clamping collar may be provided on the arm support member in order to ensure that the second arm support portion remains in abutment with the spindle.

The arm member may comprise a washer arranged to pivot around the spindle and an elongate arm portion attached to the washer. The arm member may comprise a stop which abuts with a stop on the arm support member in order to limit the angle through which the arm member can pivot in use.

If the arm support member has a collar then it may be provided with an abutment to prevent the collar moving in use.

The arm support member may be formed from a plastics material.

According to the present invention there is also provided a spectacle frame having a bridge or arm support mechanism for retaining a bridge or arm on a lens in use, the mechanism comprising:
a shaft formed on the bridge or arm support and a lug, also formed on the bridge or arm support and adjacent to the shaft, wherein, in use, the shaft is arranged to pass through a hole formed in a lens to retain the bridge or arm support thereon and the lug sits in a notch formed in the lens.

The shaft may be threaded so that a nut can be attached thereto to retain a lens on the shaft in use. The shaft may be formed as an integral part of the bridge or arm support, or may be provided by a bolt arranged to be retained in the bridge or arm support.

The bridge or arm support may be formed from a plastics material.

The present invention also comprises a pair of spectacles having the mechanism or frame described above.

One example of the present invention will now be described with reference to the accompanying drawings, in which:
Figure 1 is a perspective view of a pair of spectacles employing the principles of the present invention;
Figure 2 is a rear view of the spectacles of figure 1 without arms attached;
Figures 3 and 4 are partial cross-sectional views of an attachment mechanism according to the present invention;
Figure 5 is a plan partial cross-sectional view of an arm according to the present invention;
Figure 6 is a side partial cross-sectional view of the arm of figure 5; and
Figure 7 is a plan partial cross-sectional view of a second arm according to the present invention.

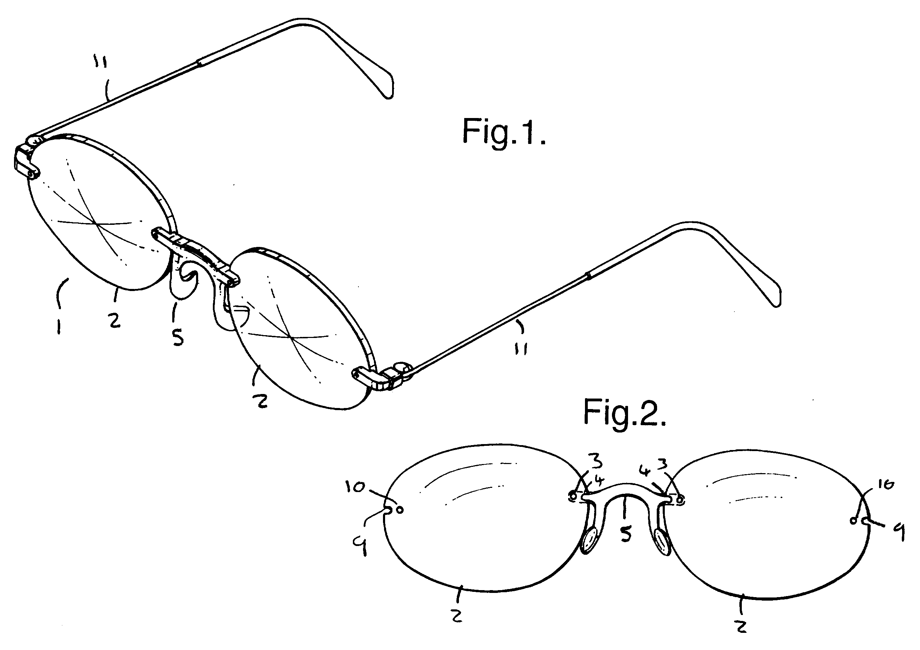

Referring to figure 1, a pair of spectacles 1 according to the present invention have a pair of lenses 2. It will be appreciated that, although a so-called frameless pair of spectacles are shown, many of the principles of the present invention can be employed with spectacles having a frame surrounding each lens. Each of the lenses 2 has a hole and a notch 3, 4 formed adjacent to a bridge member 5. Preferably, the bridge member 5 is formed from a plastics material, such as ? This enables the provision of an aesthetically appealing bridge which is sufficiently rigid yet cost-effective.

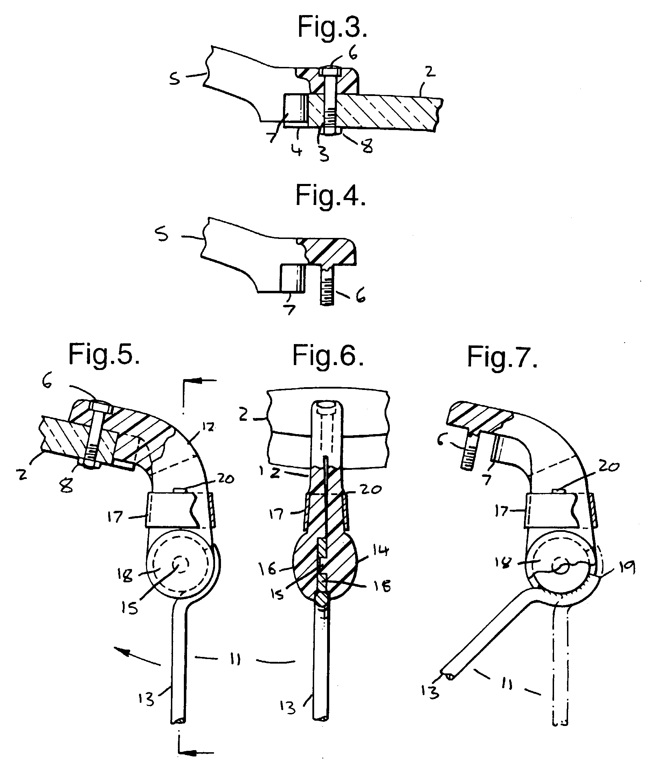

Referring to figure 3, the bridge member 5 has a threaded shaft 6 formed from a bolt which sits in a hole formed therein. The bridge 5 also has a lug 7. In use, the shaft 6 passes through the hole 3 in the lens 2 and the lug 7 sits in the notch 4 in the lens 2. A retaining nut 8 hold the lens 2 and bridge 5 together. A similar arrangement is provided at the other side of the bridge for attachment to the other lens 2. The provision of a simple single shaft and lug arrangement means that limited machining of the lens 2 is required for attachment of the bridge 5, and that such machining does not have to be of extremely high accuracy.

Figure 4 shows a second example arrangement that is similar to that of figure 3, but which has a shaft 6 formed integral with the main body of the bridge 5.

As can be seen from figure 2, each lens also has a notch 9 and hole 10 formed in the region in which spectacles arms 11 are attached thereto. This enables the provision of a fixing mechanism similar to that shown in figures 3 and 4 to be employed also for fixing of the arms 11 to the lenses 2.

Referring to figure 5, it can be seen that each arm 11 is formed from an arm support member 12 and arm member 13 pivotally attached thereto. Referring to figure 6, the arm support member 12 comprises a first arm support portion 14 having a spindle 15 formed thereon, and a second arm support portion 16, which abuts the upper surface of the spindle 15 a clamping collar 17 retains the first and second arm support portions 14, 16 in abutment. The abutting relationship of the first arm support portion 14 and the second arm support portion 16 retains the arm member 13 on the spindle 15 but allows it to pivot around the spindle 15. The arm member 13 may be formed from a single strip which is curved to pivot around the spindle 15 or may, as shown in figures 5 and 7 be formed from a washer and elongate portion attached thereto by adhesive or soldering, dependent upon the materials being employed. The arm member 13 may be formed so as to have an abutment 19 which limits the angle through which the arm 13 can pivot. The retaining collar 17 may be prevented from moving by an abutment 20 formed on the arm support member 12.

This hinge arrangement has the advantage that it does not have to be formed solely from metal, reducing costs and increasing design flexibility. Furthermore, there is no need for precisive machine screw components and the hinge mechanisms can be made to be quite robust whilst still being aesthetically pleasing. In addition, manufacture time for the frame is reduced.

## Claims

1. A spectacle frame comprising:
an arm support member arranged to be attached to a lens in use, the arm support member comprising a first arm support portion having a spindle formed thereon and a second arm support portion arranged to abut the spindle in use; and
an arm member, the arm member arranged to pivot, in use, around the spindle,
whereby, in use, the second arm retaining portion retains the arm on the spindle when abutting the spindle.

2. A frame according to claim 1, further comprising a clamping collar on the arm support member in order to ensure that the second arm support portion remains in abutment with the spindle.

3. A frame according to claim 1, wherein the arm support member is provided with an abutment to prevent the collar moving in use.

4. A frame according to claims 1, 2 or 3, wherein the arm member comprises a washer arranged to pivot around the spindle and an elongate arm portion attached to the washer.

5. A frame according to any preceding claim, wherein the arm member comprises a stop which abuts with a stop on the arm support member in order to limit the angle through which the arm member can pivot in use.

6. A frame according to any preceding claim wherein the arm support member is formed from a plastics material.

7. A spectacle frame having a bridge or arm support mechanism for retaining a bridge or arm on a lens in use, the mechanism comprising:
a shaft formed on the bridge or arm support and a lug, also formed on the bridge or arm support and adjacent to the shaft, wherein, in use, the shaft is arranged to pass through a hole formed in a lens to retain the bridge or arm support thereon and the lug sits in a notch formed in the lens.

8. A frame according to claim 7, wherein the shaft is threaded so that a nut can be attached thereto to retain a lens on the shaft in use.

9. A frame according to claim 7 or claim 8, wherein the shaft is formed as an integral part of the bridge or arm support.

10. A frame according to any of claims 7 to 9, wherein the bridge or arm support is formed from a plastics material.

11. A pair of spectacles comprising a frame according to any preceding claim.
